# EUROPÄISCHE PATENTSCHRIFT

(11) **EP 1 001 589 B1**
(45) Veröffentlichungstag und Bekanntmachung des Hinweises auf die Patenterteilung: **28.03.2018**
(21) Anmeldenummer: 99122419.7
(22) Anmeldetag: 10.11.1999
(51) Int. Cl.: H04M 3/42, H04Q 3/62

(54) **Kommunikationsanlage**
Central de télécommunications
Telecommunications exchange

(30) Priorität: 13.11.1998 DE 19852425
(43) Veröffentlichungstag der Anmeldung: 17.05.2000
(73) Patentinhaber: Unify GmbH & Co. KG, 80807 München (DE)
(72) Erfinder: Neuhaus, Ralf, 44534 Lünen (DE)
(74) Vertreter: Fritzsche, Thomas

(56) Entgegenhaltungen:
- EP-A- 0 821 510
- EP-A- 0 824 295
- US-A- 5 742 596
- US-A- 5 751 795
- US-A- 5 764 639

## Beschreibung

Die Erfindung betrifft eine Kommunikationsanlage gemäß dem Oberbegriff des Patentanspruchs 1.

Unternehmen versuchen sich zunehmend durch einen verbesserten Kundenservice Wettbewerbsvorteile zu schaffen. Insbesondere bei einem Gespräch mit dem Kunden ist es von Bedeutung, Informationen zu bisherigen Transaktionen mit dem Kunden zur Verfügung zu haben. Ein bekanntes grundsätzliches Vorgehen zur Unterstützung dieser Informationsaufbereitung ist die sogenannte Computer-Telephonie-Integration - in der Literatur häufig kurz mit CTI bezeichnet. Bei dieser werden parallel zu einer Sprachverbindung zwischen Kommunikationsendgeräten Daten, die dieser Sprachverbindung zugehören an einem, einem Kommunikationsendgerät zugeordneten 'Personal Computer'- kurz als PC bezeichnet - angezeigt, so daß durch zusätzlich bereitgestellte Informationen eine umfassendere Betreuung eines Kunden ermöglicht wird.

Aus der deutschen Patentschrift DE 43 30 031 C2 ist ein derartiges CTI-System bekannt, bei dem eine Kommunikationsanlage zum Anschluß von Kommunikationsendgeräten über ein LAN (Lokal Area Network) mit einer Mehrzahl von Datenverarbeitungseinrichtungen, z.B. mit 'Personal Computern' verbunden ist. Hierbei ist einem Kommunikationsendgerät jeweils eine Datenverarbeitungseinrichtung zugeordnet. Eine Verbindung der Datenverarbeitungseinrichtungen mit der Kommunikationsanlage erfolgt über ein sogenanntes Integrationselement und einen sogenannten 'LAN-Server'.

Wird im Rahmen eines Verbindungsaufbaus eine Sprachverbindung mit einem an der Kommunikationsanlage angeschlossenen Kommunikationsendgerät aufgebaut, so wird parallel zur Sprachverbindung über das Integrationselement und den 'LAN-Server' eine Verbindung zwischen der Kommunikationsanlage und einer, dem Kommunikationsendgerät zugeordneten Datenverarbeitungseinrichtung über das LAN aufgebaut. Über diese Verbindung werden der Sprachverbindung zugeordneten Daten - als Daten über den jeweiligen Kommunikationsteilnehmer - an die, dem Kommunikationsendgerät zugeordnete Datenverarbeitungseinrichtung übermittelt und an dieser angezeigt. Somit können einerseits dem Teilnehmer an seinem Kommunikationsendgerät zusätzliche Informationen über seinen Gesprächspartner am Bildschirm der Datenverarbeitungseinrichtung angezeigt werden und andererseits lassen sich der Sprachverbindung zugeordnete Vermittlungsfunktionen, sogenannte Leistungsmerkmale der Kommunikationsanlage, wie z.B. Einrichten einer Konferenzschaltung, Rufumleitung, Makeln, usw. komfortabel von der Datenverarbeitungseinrichtung aus zu steuern bzw. der Aktivierung veranlassen.

Es sind im übrigen auch schon sogenannte 'CTI-Server' bekannt, welche die Funktionen des Integrationselementes und des 'LAN-Servers' in einer Einheit zusammenfassen.

Aus der Druckschrift WO 97/13352, Bannister et al., "Methods and apparatus for originating voice calls" ist eine Anordnung bekannt, bei der ein Http-Server mittels eines Signalisierungsprotokolls des AIN (Advanced Intelligent Network) Daten mit einer zentralen Steuereinheit einer Kommunikationsanlage austauscht und somit CTI-Funktionen an externen Datenverarbeitungseinrichtungen bereitstellt.

Für eine Realisierung der beschriebenen Leistungsmerkmale werden sowohl für den 'CTI-Server' als auch für die Datenverarbeitungseinrichtungen systemspezifische Programme - d.h. kommunikationsanlagen- und rechner-individuelle Anwendungssoftware - und Protokolle benötigt, durch welche einerseits die von der Kommunikationsanlage bereitgestellten Informationen an den Datenverarbeitungseinrichtungen angezeigt werden können und durch welche andererseits zwischen den Datenverarbeitungseinrichtungen und dem 'CTI-Server' bzw. zwischen dem 'CTI-Server' und der Kommunikationsanlage zu übermittelnde Nachrichten bidirektional übermittelt werden können. Beispiele für bekannte systemspezifische Programmschnittstellen, über die, ausgehend von auf den Datenverarbeitungseinrichtungen laufenden Anwendungen, Informationen an die Kommunikationsanlage übermittelt werden können, sind die sogenannte TAPI- bzw. CAPI-Schnittstelle (TAPI: Telephony Application Programming Interface; CAPI: Common ISDN Application Programming Interface).

Das bekannte Zusammenwirken von CTI-Einrichtungen und der Kommunikationsanlage bringt mit sich, daß für unterschiedliche Kommunikationsanlagen und je nach Art der an die Kommunikationsanlage angeschlossenen Datenverarbeitungseinrichtungen - beispielsweise eine sogenannte 'Workstation' oder ein 'Personal Computer' - unterschiedliche Programme und Protokolle verwendet werden müssen.

Der vorliegenden Erfindung liegt die Aufgabe zugrunde, eine Kommunikationsanlage derart weiterzubilden, daß der Aufwand für eine Implementierung von Computer-Telephonie-Integration-Funktionen gering gehalten werden kann.

Gelöst wird die Aufgabe ausgehend von den Merkmalen des Oberbegriffs des Patentanspruchs 1 durch dessen kennzeichnende Merkmale.

Ein wesentlicher Vorteil der erfindungsgemäßen Kommunikationsanlage besteht darin, daß durch die Integration einer DV-Steuereinheit in die Kommunikationsanlage für den Anschluß der Datenverarbeitungseinrichtungen an die Kommunikationsanlage kein zusätzlicher externer 'CTI-Server' und somit keine zusätzlichen Protokolle für eine Datenübermittlung zwischen der Kommunikationsanlage und dem 'CTI-Server' benötigt werden.

Ein weiterer Vorteil der erfindungsgemäßen Kommunikationsanlage besteht darin, daß durch eine direkte Verbindung der weiteren Steuereinheit mit einer zentralen Steuereinheit der Kommunikationsanlage, vorhandene kommunikationsanlagen-interne Funktionen, wie z.B. eine sicherheitstechnische Überwachung, von der DV-Steuereinheit genutzt werden können.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß durch eine Ausgestaltung der DV-Steuereinheit als HTTP-Zentralrechnereinheit - in der Literatur häufig als 'HTTP-Server' bezeichnet - die Benutzungsoberfläche für die Datenverarbeitungseinrichtungen von der Kommunikationsanlage geladen werden kann und eine Datenverarbeitungseinrichtung somit wie ein multifunktionales Endgerät betrieben werden kann. Hierfür wird in den Datenverarbeitungseinrichtungen lediglich eine Visualisierungseinheit für auf dem HTTP-Protokoll basierende Informationen - in der Literatur häufig als 'Browser' bezeichnet - benötigt.

Ein weiterer Vorteil von in den Unteransprüchen definierten Ausgestaltungen der Erfindung besteht darin, daß durch die Verwendung eines 'Browsers' als Visualisierungseinheit für die Datenverarbeitungseinrichtungen eine Unabhängigkeit der verwendeten Anwendungssoftware von der Art der verwendeten Datenverarbeitungseinrichtungen, bzw. von auf den Datenverarbeitungseinrichtungen installieren Betriebssystemen erreicht wird.

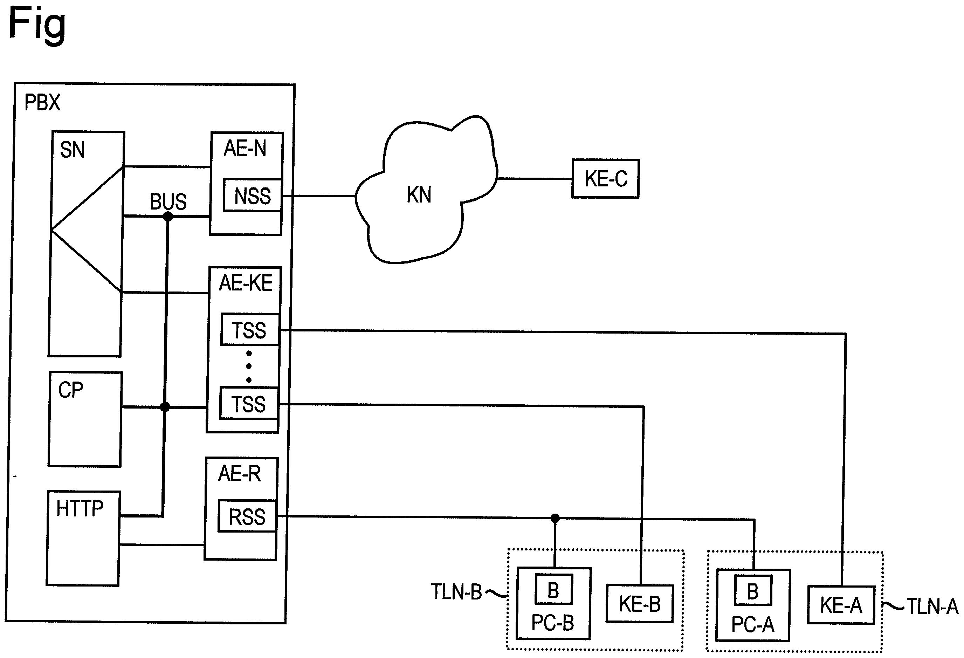

Ein Ausführungsbeispiel der Erfindung wird im folgenden anhand der Zeichnung näher erläutert.

Dabei zeigt die Figur ein Strukturbild zur schematischen Darstellung der wesentlichen Funktionseinheiten einer erfindungsgemäßen Kommunikationsanlage.

Im einzelnen zeigt die Figur eine schematische Darstellung einer Kommunikationsanlage PBX mit daran angeschlossenen internen Kommunikationsendgeräten KE-A, KE-B und einem, über ein Kommunikationsnetz KN angeschlossenen externen Kommunikationsendgerät KE-C. Des weiteren sind an die Kommunikationsanlage Datenverarbeitungseinrichtungen - im weiteren mit Rechner PC-A, PC-B bezeichnet - angeschossen, wobei jedem internen Kommunikationsendgerät KE-A, KE-B jeweils ein Rechner PC-A, PC-B zugeordnet ist. Einem an der Kommunikationsanlage PBX registrierten Teilnehmer TLN-A, TLN-B sind somit jeweils ein internes Kommunikationsendgerät KE-A, KE-B und ein Rechner PC-A, PC-B zugeordnet.

Ein Anschluß des Kommunikationsnetzes KN an die Kommunikationsanlage PBX erfolgt über eine Netzschnittstelle NSS einer in der Kommunikationsanlage PBX angeordneten Netz-Anschlußeinheit N-AE. Ist das Kommunikationsnetz KN beispielsweise ein ISDN-orientiertes (Integrated Services Digital Network) Kommunikationsnetz so erfolgt ein Anschluß des Kommunikationsnetzes KN üblicherweise über eine sogenannte S_{2M}-Schnittstelle - in der Literatur häufig auch als Primärmultiplexanschluß bezeichnet. Im allgemeinen umfaßt eine S_{2M}-Schnittstelle zum einen 30 Nutzdatenkanäle, welche als ISDN-orientierte B-Kanäle mit einer Übertragungsbitrate von jeweils 64 kBit/s ausgestaltet sind und zum anderen einen Signalisierungskanal, welcher als ISDN-orientierter D-Kanal mit einer Übertragungsbitrate von 64 kBit/s ausgestaltet ist.

Ein Anschluß der internen Kommunikationsendgeräte KE-A, KE-B an die Kommunikationsanlage PBX erfolgt über Teilnehmerschnittstellen TSS einer oder mehrerer in der Kommunikationsanlage PBX angeordneten Teilnehmer-Anschlußeinheit AE-KE. Über die Teilnehmer-Anschlußeinheit werden üblicherweise mittels S₀-Schnittstellen ISDN-Kommunikationsendgeräte oder mittels daraus abgeleiteten Schnittstellen, wie beispielsweise Uₚ₀-Schnittstellen digitale Kommunikationsendgeräte an die Kommunikationsanlage PBX angeschlossen. Allgemein umfassen eine U_{P0}- bzw. eine S₀-Schnittstelle zum einen 2 Nutzdatenkanäle, welche als ISDN-orientierte B-Kanäle mit einer Übertragungsrate von jeweils 64 kBit/s ausgestaltet sind und zum anderen einen Signalisierungskanal, welcher als ISDN-orientierter D-Kanal mit einer Übertragungsrate von 16 kBit/s ausgestaltet ist. Des weiteren besteht die Möglichkeit mittels sogenannter a/b-Schnittstellen der Teilnehmer-Anschlußeinheit AE-KE analoge Kommunikationsendgeräte an die Kommunikationsanlage PBX anzuschließen.

Ein Anschluß der Rechner PC-A, PC-B an die Kommunikationsanlage PBX erfolgt über eine Rechnerschnittstelle RSS einer in der Kommunikationsanlage PBX angeordneten Rechner-Anschlußeinheit AE-R. Hierbei erfolgt der Anschluß eines, von einer Mehrzahl von Rechnern PC-A, PC-B gebildeten Rechnernetzes über eine TCP/IP-Schnittstelle (Transmission Control Protocol / Internet Protocol) der Rechner-Anschlußeinheit AE-R. Generell besteht auch die Möglichkeit lediglich einen Rechner über die TCP/IP-Schnittstelle an die Kommunikationsanlage PBX anzuschließen. Eine Datenübermittlung über das Rechnernetz erfolgt somit auf Basis des TCP/IP-Protokolls. Das TCP/IP-Protokoll unterstützt die Transportschicht (Schicht 4) des OSI-Referenzmodells (Open Systems Interconnection) und setzt auf dem IP-Protokoll (Internet Protocol) auf, welches die Vermittlungsschicht (Schicht 3) des OSI-Referenzmodells unterstützt.

Des weiteren weist die Kommunikationsanlage PBX ein Koppelfeldmodul SN, eine zentrale Steuerung CP und eine Rechner-Steuereinheit HTTP auf. Das Koppelfeldmodul SN ist über mindestens jeweils einen sogenannten 'PCM-Highway' mit der Netz-Anschlußeinheit AE-N und mit der Teilnehmer-Anschlußeinheit AE-KE verbunden. Ein 'PCM-Highway' umfaßt korrespondierend zur S_{2M}-Schnittstelle im allgemeinen 30 Nutzdatenkanäle, welche als ISDN-orientierte B-Kanäle mit einer Übertragungsbitrate von jeweils 64 kBit/s ausgestaltet sind und zum anderen einen Signalisierungskanal, welcher als ISDN-orientierter D-Kanal mit einer Übertragungsbitrate von 64 kBit/s ausgestaltet ist. Durch das Koppelfeldmodul SN erfolgt ein Durchschalten von über die Kommunikationsanlage PBX geführten Sprachverbindungen zwischen Kommunikationsendgeräten KE-A, KE-B, KE-C.

Die zentrale Steuereinheit CP übernimmt im wesentlichen die Steueraufgaben der Kommunikationsanlage PBX. Hierzu ist die zentrale Steuereinheit CP über ein Bussystem BUS mit der Netz-Anschlußeinheit AE-N, der Teilnehmer-Anschlußeinheit AE-KE, der Rechner-Anschlußeinheit AE-R, dem Koppelfeldmodul SN und der Rechner-Steuereinheit HTTP verbunden.

Die Rechner-Steuereinheit HTTP ist über die Rechner-Anschlußeinheit AE-R mit dem, durch die Rechner PC-A, PC-B gebildeten Rechnernetz verbunden und dient zur Steuerung der CTI-Funktionen (Computer-Telephonie-Integration) der Rechner PC-A, PC-B. Hierzu ist die Rechner-Steuereinheit HTTP als sogenannter 'HTTP-Server' ausgestaltet. Das HTTP-Protokoll (HyperText Transmission Protocol) setzt auf dem TCP/IP-Protokoll auf und unterstützt die Anwendungsschicht (Schicht 7) des OSI-Referenzmodells und ermöglicht eine Übermittlung von sogenannten WWW-Seiten (World Wide Web) von der Rechner-Steuereinheit HTTP an eine Mehrzahl von Peripherieeinheiten, im vorliegenden Ausführungsbeispiel an die Rechner PC-A, PC-B. Diese Architektur wird in der Literatur häufig als 'Client-Server-Architektur' bezeichnet, wobei im vorliegenden Ausführungsbeispiel die Rechner PC-A, PC-B als 'Clients' und die Rechner-Steuereinheit HTTP als 'Server' bezeichnet werden.

Für eine Verarbeitung der von der Rechner-Steuereinheit HTTP an die Rechner PC-A, PC-B übermittelten Informationen ist in den Rechnern PC-A, PC-B eine Visualisierungseinheit B eingerichtet, durch welche die übermittelten Informationen auf einem Bildschirm der Rechner PC-A, PC-B angezeigt werden. Eine derartige Visualisierungseinheit B für eine Verarbeitung von auf dem HTTP-Protokoll übermittelten Informationen wird in der Literatur allgemein als 'Browser' bezeichnet. Derartige 'Browser' sind unabhängig von der Art der verwendeten Rechner (bekannte Rechnertypen sind beispielsweise sogenannte 'Workstations' oder 'Personal Computer'), bzw. von den auf den Rechnern installierten Betriebssystemen (bekannte Betriebssysteme sind beispielsweise UNIX oder WINDOWS NT) verfügbar. Durch die Ausgestaltung der Rechner-Steuereinheit HTTP als 'HTTP-Server' und die Verwendung eines sogenannten 'Browsers' zur Visualisierung der Informationen auf der 'Client'-Seite, d.h. für die Rechner, so daß die Benutzungsoberfläche der Rechner PC-A, PC-B aus der Kommunikationsanlage PBX heraus geladen wird, wird eine Plattformunabhängigkeit von den, auf den Rechnern PC-A, PC-B verwendeten Systemen erreicht.

Für eine Datenübermittlung ausgehend von den Rechnern PC-A, PC-B zur Rechner-Steuereinheit HTTP ist der TCP/IP-Schnittstelle der Rechner-Anschlußeinheit AE-R eine eindeutige IP-Adresse zugeordnet. Diese IP-Adresse entspricht einer sogenannten URL-Adresse (Uniform Resource Locator) im HTTP-Protokoll, durch welche ausgehend von den Rechnern PC-A, PC-B eine der URL-Adresse zugeordnete, in der Rechner-Steuereinheit HTTP gespeicherte WWW-Seite selektiert und durch die Visualisierungseinheit B am Bildschirm der Rechner PC-A, PC-B angezeigt werden kann. Eine bidirektionale Datenübermittlung zwischen den Rechnern PC-A, PC-B und der Rechner-Steuereinheit HTTP erfolgt über sogenannte 'Socketverbindungen' in Form von 'Stringmeldungen', d.h. auf Basis des ASCII-Zeichenformats (American Standard Code for Information Interchange).

Von den Rechnern PC-A, PC-B an die Rechner-Steuereinheit HTTP übermittelte Nachrichten werden von der Rechner-Steuereinheit HTTP umgewandelt und gegebenenfalls direkt über das Bussystem BUS an die entsprechenden Funktionseinheiten der Kommunikationsanlage PBX, z.B. die zentrale Steuereinheit CP oder das Koppelfeldmodul SN weitergeleitet. Somit können durch die, in die Kommunikationsanlage PBX integrierte Rechner-Steuereinheit HTTP im Gegensatz zu einem externen 'CTI-Server' vorhandene kommunikationssystem-interne Funktionen der Kommunikationsanlage PBX genutzt werden.

Im Folgenden wird das Zusammenwirken der beschriebenen Funktionseinheiten anhand eines Ausführungsbeispiels kurz beschrieben:

Wird eine Sprachverbindung zwischen dem externen Kommunikationsendgerät KE-C und einem internen Kommunikationsendgerät - beispielsweise mit dem, einem ersten Teilnehmer TLN-A zugeordneten ersten internen Kommunikationsendgerät KE-A - ausgehend vom externen Kommunikationsendgerät KE-C über die Netz-Anschlußeinheit AE-N, das Koppelfeldmodul SN und die Teilnehmer-Anschlußeinheit AE-KE aufgebaut, so wird dies von der Rechner-Steuereinheit HTTP erkannt. Parallel zur Sprachverbindung wird daraufhin ausgehend von der Rechner-Steuereinheit HTTP über die Rechner-Anschlußeinheit AE-R eine Verbindung zu dem, dem ersten Teilnehmer TLN-A zugeordneten ersten Rechner PC-A aufgebaut.

Anhand der beispielsweise im Rahmen einer ISDN-Verbindung - im Rahmen des Leistungsmerkmals 'Calling Party Number' - übermittelten Rufnummer des externen Kommunikationsendgerätes KE-C oder des Namens des, dem externen Kommunikationsendgerät KE-C zugeordneten rufenden Teilnehmers können in der Rechner-Steuereinheit HTTP gespeicherte, dem rufenden Teilnehmer zugeordnete Daten selektiert und an den ersten Rechner PC-A übermittelt werden. Diese Daten werden daraufhin durch die Visualisierungseinheit B am Bildschirm des ersten Rechners PC-A angezeigt. Auf diese Weise können dem gerufenen Teilnehmer TLN-A zusätzliche Informationen über den rufenden Teilnehmer zur Verfügung gestellt werden.

Des weiteren besteht die Möglichkeit ausgehend vom ersten Rechner PC-A der Sprachverbindung zwischen dem externen Kommunikationsendgerät KE-C und dem ersten internen Kommunikationsendgerät KE-A zugeordnete Vermittlungsfunktionen der Kommunikationsanlage PBX, wie z.B. Einrichten einer Konferenzschaltung, Rufumleitung, Makeln, usw. zu steuern. Soll z.B. während einer bestehenden Sprachverbindung zwischen dem externen Kommunikationsendgerät KE-C und dem ersten internen Kommunikationsendgerät KE-A eine Konferenzschaltung mit einem dritten Kommunikationsendgerät - beispielsweise dem zweiten internen Kommunikationsendgerät KE-C - eingerichtet werden, wird dies ausgehend vom ersten Rechner PC-A an die Rechner-Steuereinheit HTTP signalisiert. Die Rechner-Steuereinheit HTTP wandelt eine entsprechende empfangene Signalisierungsnachricht in eine korrespondierende Steuermeldung um und leitet diese über das Bussystem BUS an die entsprechenden Funktionseinheiten der Kommunikationsanlage PBX, z.B. an das Koppelfeldmodul SN weiter, durch welche eine Konferenzschaltung zwischen dem externen Kommunikationsendgerät KE-C und dem ersten und dem zweiten internen Kommunikationsendgerät KE-A, KE-B eingerichtet wird.

Auf diese Weise können analoge interne Kommunikationsendgeräten auch Leistungsmerkmale der Kommunikationsanlage PBX nutzen, welche normalerweise analogen Kommunikationsendgeräten nicht zur Verfügung stehen.

Ist dem externen Kommunikationsendgerät KE-C ebenfalls ein - nicht dargestellter - externer Rechner zugeordnet, welcher z.B. über eine S₀-Schnittstelle oder ein Modem an das Kommunikationsnetz KN angeschlossen ist, so können auf einfache Weise parallel zur Sprachverbindung Daten zwischen dem ersten Rechner PC-A und dem externen Rechner über die Rechner-Steuereinheit HTTP ausgetauscht werden.

## Patentansprüche

1. Kommunikationsanlage (PBX),
mit einer zentralen Steuereinheit (CP) und mit ersten, eine Teilnehmerschnittstelle (TSS) oder eine Netzschnittstelle (NSS) aufweisenden Anschlußeinheiten (AE-KE, AE-N) zur Verbindung mit Kommunikationsendgeräten (KE-A, KE-B, KE-C), wobei internen Kommunikationsendgeräten (KE-A, KE-B) jeweils eine eigene Datenverarbeitungseinrichtung (PC-A, PC-B) mit Bildschirmeinrichtung zugeordnet ist,
**gekennzeichnet durch**,
eine von der zentralen Steuereinheit (CP) verschiedene und mit ihr über ein kommunikationsanlagen-internes Bus-System (BUS) verbundene kommunikationsanlagen-interne DV-Steuereinheit (HTTP),
- die zum Übermitteln von auf den jeweiligen Gesprächspartner bezogenen Daten an die einer Sprachverbindung mit einem internen Kommunikationsendgerät (KE-A, KE-B) zugeordnete Datenverarbeitungseinrichtung (PC-A, PC-B) eingerichtet ist, und
- die zum Umsetzen und Weiterleiten von datenverarbeitungseinrichtungsseitig gesendeten Informationen an die zentrale Steuereinheit (CP) ausgebildet ist, und
mindestens eine, mit der kommunikationsanlagen-internen DV-Steuerung (HTTP) verbundene und eine Rechnerschnittstelle (RSS) aufweisende zweite Anschlußeinheit (AE-R) zum Anschließen der Datenverarbeitungseinrichtungen (PC-A, PC-B), wobei die zweite Anschlußeinheit (AE-R) von den ersten Anschlußeinheiten (AE-KE, AE-N) verschieden ist.

2. Kommunikationssystem nach Anspruch 1,
**dadurch gekennzeichnet,**
**daß** die zweite Anschlußeinheit (AE-R) mindestens eine auf dem TCP/IP-Protokoll (Transmission Control Protocol / Internet Protocol) basierende Datenschnittstelle (RSS) zum Anschluß der Datenverarbeitungseinrichtungen (PC-A, PC-B) aufweist.

3. Kommunikationssystem nach Anspruch 1 oder 2,
**dadurch gekennzeichnet,**
**daß** die kommunikationsanlagen-interne DV-Steuerung (HTTP) als HTTP-Zentralrechnereinheit (HyperText Transport Protocol) ausgestaltet ist, wobei für eine Datenübermittlung zwischen der kommunikationsanlagen-internen DV-Steuerung (HTTP) und den Datenverarbeitungseinrichtungen (PC-A, PC-B) ein HTTP-Protokoll eingerichtet ist.

4. Kommunikationssystem nach Anspruch 3,
**dadurch gekennzeichnet,**
**daß** die Datenverarbeitungseinrichtungen (PC-A, PC-B) jeweils eine Visualisierungseinheit (B) zur Verarbeitung von auf dem HTTP-Protokoll (Hypertext Transport Protocol) basierenden Informationen aufweisen.

5. Kommunikationssystem nach einem der Ansprüche 1 bis 3,
mit einem
ein Koppelfeldmodul (SN) zum Durchschalten von Sprachverbindungen,
**dadurch gekennzeichnet,**
**daß** das Bus-System (BUS) auch mit allen ersten Anschlußeinheiten (AE-KE, AE-N) und dem Koppelfeldmodul (SN) verbunden ist, und dass die DV-Steuereinheit (HTTP) ausgelegt ist, den Aufbau einer Sprachverbindung zwischen einem externen Kommunikationsendgerät (KE-C) und einem internen Kommunikationsendgerät (KE-A, KE-B) zu erkennen und daraufhin eine Verbindung zu der dem internen Kommunikationsendgerät (KE-A, KE-B) zugeordneten Datenverarbeitungseinrichtung (PC-A, PC-B) aufzubauen.

6. Kommunikationssystem nach Anspruch 5,
**dadurch gekennzeichnet,**
**daß** die DV-Steuereinheit (HTTP) ausgelegt ist, wenn als Sprachverbindung eine ISDN-Verbindung aufgebaut wird, eine Rufnummer für das oder einen Namen zu dem externen Kommunikationsendgerät (KE-C) zu erfassen und der Rufnummer oder dem Namen zugeordnete, in der DV-Steuereinheit (HTTP) gespeicherte Daten zu selektieren und an die dem internen Kommunikationsendgerät zugeordnete Datenverarbeitungseinrichtung (PC-A, PC-B) zu übermitteln.

## Claims

1. A communication system (PBX),
with a central control unit (CP) and with first connection units (AE-KE, AE-N) comprising a subscriber interface (TSS) or a network interface (NSS), for the connection with communication terminals (KE-A, KE-B, KE-C), wherein in each case a separate data processing device (PC-A, PC-B) with monitor device is associated with internal communication terminals (KE-A, KE-B),
**characterised by**
a communication system-internal DV control unit (HTTP), different from the central control unit (CP) and connected thereto via a communication system-internal bus system (BUS)
- which is set up for transmitting data relating to the respective conversation partners to the data processing device (PC-A, PC-B) which is associated with a voice connection with an internal communication terminal (KE-A, KE-B),
and
- which is designed for converting and forwarding information sent on the data processing device side to the central control unit (CP), and
at least one second connection unit (AE-R), which is connected to the communication system-internal DV control (HTTP) and comprises a computer interface (RSS) for the connection of the data processing devices (PC-A, PC-B), wherein the second connection unit (AE-R) is different from the first connection units (AE-KE, AE-N).

2. The communication system according to Claim 1,
**characterised in that**
the second connection unit (AE-R) comprises at least one data interface (RSS), which is based on the TCP/IP protocol (Transmission Control Protocol / Internet Protocol), for the connection of the data processing devices (PC-A, PC-B).

3. The communication system according to Claim 1 or 2,
**characterised in that**
the communication system-internal DV control (HTTP) is configured as an HTTP central computer unit (HyperText Transport Protocol), wherein an HTTP protocol is set up for data transmission between the communication system-internal DV control (HTTP) and the data processing devices (PC-A, PC-B).

4. The communication system according to Claim 3,
**characterised in that**
the data processing devices (PC-A, PC-B) in each case comprise a visualization unit (B) for the processing of information based on the HTTP protocol (Hypertext Transport Protocol).

5. The communication system according to any one of Claims 1 to 3,
with a
coupling field module (SN) for the switching through of voice connections,
**characterised in that**
the bus system (BUS) is also connected to all first connection units (AE-KE, AE-N) and to the coupling field module (SN), and that the DV control unit (HTTP) is designed to recognize the setup of a voice connection between an external communication terminal (KE-C) and an internal communication terminal (KE-A, KE-B), and thereafter to set up a connection with the data processing device (PC-A, PC-B) associated with the internal communication terminal (KE-A, KE-B).

6. The communication system according to Claim 5,
**characterised in that**,
if an ISDN connection is set up as voice connection, the DV control unit (HTTP) is designed to acquire a call number for or a name for the external communication terminal (KE-C) and to select data associated with the call number or with the name and stored in the DV control unit (HTTP) and transmit said data to the data processing device (PC-A, PC-B) associated with the internal communication terminal.

## Revendications

1. Central de télécommunications (PBX),
avec une unité centrale de commande (CP) et avec des premières unités de raccordement (AE-KE, AE-N), comprenant une interface d'abonné (TSS) ou une interface de réseau (NSS), en vue de la liaison avec des terminaux de communication (KE-A, KE-B, KE-C), dans lequel à chacun des terminaux de communication internes (KE-A, KE-B) est associé un dispositif de traitement de données (PC-A, PC-B) particulier avec un dispositif d'écran,
**caractérisé par**
une unité de commande de traitement de données, interne au central de télécommunications (HTTP), différente de l'unité centrale de commande (CP) et reliée à celle-ci par le biais d'un système de bus (BUS) interne au central de télécommunications,
- qui est configurée pour le transfert de données, se rapportant au partenaire de conversation concerné, au dispositif de traitement de données (PC-A, PC-B) associé à une liaison vocale avec un terminal de communication interne (KE-A, KE-B), et
- qui est conçue pour la conversion d'informations, envoyées côté dispositif de traitement de données, et pour leur transmission à l'unité centrale de commande (CP), et
au moins une seconde unité de raccordement (AE-R), reliée à l'unité de commande de traitement de données, interne au central de télécommunications (HTTP) et comprenant une interface d'ordinateur (RSS), en vue du raccordement des dispositifs de traitement de données (PC-A, PC-B), dans lequel la seconde unité de raccordement (AE-R) est différente de la première unité de raccordement (AE-KE, AE-N).

2. Central de télécommunications selon la revendication 1,
**caractérisé**
**en ce que** la seconde unité de raccordement (AE-R) comprend au moins une interface de données (RSS) basée sur le protocole TCP/IP (protocole de commande de transmission / protocole Internet) en vue du raccordement des dispositifs de traitement de données (PC-A, PC-B).

3. Central de télécommunications selon la revendication 1 ou 2,
**caractérisé**
**en ce que** l'unité de commande de traitement de données, interne au central de télécommunications (HTTP) est agencée en tant d'unité centrale d'ordinateur HTTP (protocole de transport d'hypertexte), dans lequel un protocole HTTP est configuré pour un transfert de données entre l'unité de commande de traitement de données, interne au central de télécommunications (HTTP) et les dispositifs de traitement de données (PC-A, PC-B).

4. Central de télécommunications selon la revendication 3,
**caractérisé**
**en ce que** les dispositifs de traitement de données (PC-A, PC-B) comprennent chacun une unité de visualisation (B) en vue du traitement d'informations basées sur le protocole HTTP (protocole de transport d'hypertexte).

5. Système de télécommunications selon l'une quelconque des revendications 1 à 3, avec un module de matrice de commutation (SN) pour connecter des liaisons vocales,
**caractérisé**
**en ce que** le système de bus (BUS) est également relié aux premières unités de raccordement (AE-KE, AE-N) et au module de matrice de commutation (SN), et **en ce que** l'unité de commande de traitement de données (HTTP) est agencée pour reconnaître l'établissement d'une liaison vocale entre un terminal de communication externe (KE-C) et un terminal de communication interne (KE-A, KE-B) et, à la suite de quoi, pour établir une liaison au dispositif de traitement de données (PC-A, PC-B) associé au terminal de communication interne (KE-A, KE-B).

6. Système de télécommunications selon la revendication 5,
**caractérisé**
**en ce que** l'unité de commande de traitement de données (HTTP) est agencée, lorsqu'une liaison RNIS est établie en tant que liaison vocale, pour détecter un numéro d'appel pour le terminal de communication externe (KE-C) ou un nom associé au terminal de communication externe (KE-C) et pour sélectionner des données, associées au numéro d'appel ou au nom et enregistrées dans l'unité de commande de traitement de données (HTTP), et pour les transférer au dispositif de traitement de données (PC-A, PC-B) associé au terminal de communication interne.
